# EUROPEAN PATENT SPECIFICATION

(11) **EP 0 602 781 B1**
(45) Date of publication and mention of the grant of the patent: **31.03.2004**
(21) Application number: 93308461.8
(22) Date of filing: 22.10.1993
(51) Int. Cl.: H04Q 3/00

(54) **Intelligent network architecture**
Intelligente Netzwerk-Architektur
Architecture de réseau intelligent

(30) Priority: 16.11.1992 GB 9223961
(43) Date of publication of application: 22.06.1994
(73) Proprietor: Marconi UK Intellectual Property Ltd, Coventry, CV3 1HJ (GB)
(72) Inventor: Williams, John Philip, Brislington, Bristol, BS4 5AN (GB)
(74) Representative: Hoste, Colin Francis

(56) References cited:
- WO-A-92/00642
- AT & T TECHNICAL JOURNAL, vol. 71,no. 5, October 1992 NEW YORK USSHORT HILLS US, pages 6-12, XP 000329801 SYKES ET AL. 'GLOBALIZATION OF INTELLIGENT NETWORK SERVICES'
- ERICSSON REVIEW, vol. 1,no. 67, 1990 STOCKHOLM SE, pages 12-22, XP 000126883 VAN HAL ET AL. 'SERVICE SCRIPT INTERPRETER, AN ADVANCED INTELLIGENT NETWORK PLATFORM'
- INTERNATIONAL SWITCHING SYMPOSIUM, vol. 2, 25 October 1992 YOKOHAMA JP, pages 43-47, XP 000429940 FUJIOKA ET AL. 'TOWARDS GLOBALISATION OF INTELLIGENT NETWORK FOR COMING AGE'
- INTERNATIONAL CONFERENCE ON COMMUNICATIONS, vol. 2, 23 June 1991 DENVER US, pages 941-947, XP 000269624 VAPHEAS ET AL. 'ADVANCED INTELLIGENT NETWORK: EVOLUTION'

## Description

The objective of the present invention is to simplify the Service Switching Point (SSP) of current Intelligent Network (IN) architecture to allow ease of implementation, and to provide a future-proof IN architecture without the constraints of Capability Sets or similar limitations.

Public network exchange requirements are reviewed as are the requirements of the intelligent network components which enable access to IN services.

Typical IN services are described but details of IN service design and the provision of the Service Management platform which installs, maintains and updates the services are not provided. The Service Management requirement is simplified in that each service is self-contained and there is no common component that accumulates the complexity of all services, as arises in the Service Control Point (SCP) of conventional IN.

Intelligent Network services are available to any terminal connected to the network; subscriber lines, Private Branch Exchange (PBX) lines, Centrex extensions or Integrated Services Digital Network (ISDN) terminals. The description includes the means by which IN services are made available to terminals on analogue exchanges. Subscribers wishing to participate in interactive type IN services need a push-button telephone or equivalent facility.

Intelligent Network services are provided in such a manner that the whole of the intelligence is in the intelligent service itself. Public exchanges are required to do very little more than identify IN service codes )triggers) and send a simple message to their local IN Service Router,

All connections to intelligent services are established and controlled by the intelligent service terminal itself, this enables the avoidance of "hacking" and other types of unauthorised access; enabling the service to configure itself as it will before connecting to the caller and avoiding the need to allocate public network addresses to all the facets of intelligent network services.

News services and additional equipment may be connected to any convenient point in the public network without even notifying the adjacent exchanges of the new service code, i.e. set the trigger condition. Existing services may be advanced or even completely restructured with no effect whatever upon the public network equipment.

International Patent Application No. WO 92/00642 describes an enhanced services unit (ESU) for connection to existing exchanges. The unit is connected via CCSS#7 trunk connections to an existing exchange and is viewed by the exchange as another exchange. The unit may control switching via re-entrant trunks on the main exchange. Services are software defined and may be configured to suit particular customers. An advantageous implementation of the MTP part of CCSS#7 is also described.

Ericsson Review, Vol. 1, No. 67, pages 12-22, Stockholm 1990, Van Hal et al, "Service Script Interpreter, An Intelligent Network Platform", describes Ericsson's products for Advanced Intelligent Networks which enable network service providers to structure and program a wide range of advanced network services. The products, based on the AXE10 system and the new Telecommunication Management and Operations Support system (TMOS) are capable of supplying the need for services to all subscribers in the telecom network. It is the Service Script Interpreter in AXE 10 that creates these new opportunities.

According to the present invention there is provided a telecommunications system comprising a plurality of subscriber and/or junction terminals connected to a local exchange, the local exchange having an Intelligent Network message terminal, a Service Router addressable from the local exchange via the message terminal and a Signal Transfer Point and having means for identifying an Intelligent Network Service Request, the Intelligent Network Service Request including the directory number of an originating one of the plurality of subscriber and/or junction terminals, a call identifier and an Intelligent Network Service Identifier from an originating one of the plurality of subscriber and/or junction terminals, the local exchange further having means for addressing a message via the message terminal to the Service Router, the Service Router being arranged to readdress the message to an appropriate Intelligent Network Service Delivery Point, the Service Delivery Point upon receipt of the message establishing a connection between the Service Delivery Point and the originating one of the plurality of subscriber and/or junction terminals.

The present invention will now be described, by way of example, with reference to the accompanying drawings in which:
Figure 1 shows an example of an IN Service connection with a Local Exchange subscriber, and
Figure 2 shows a typical single party IN service.

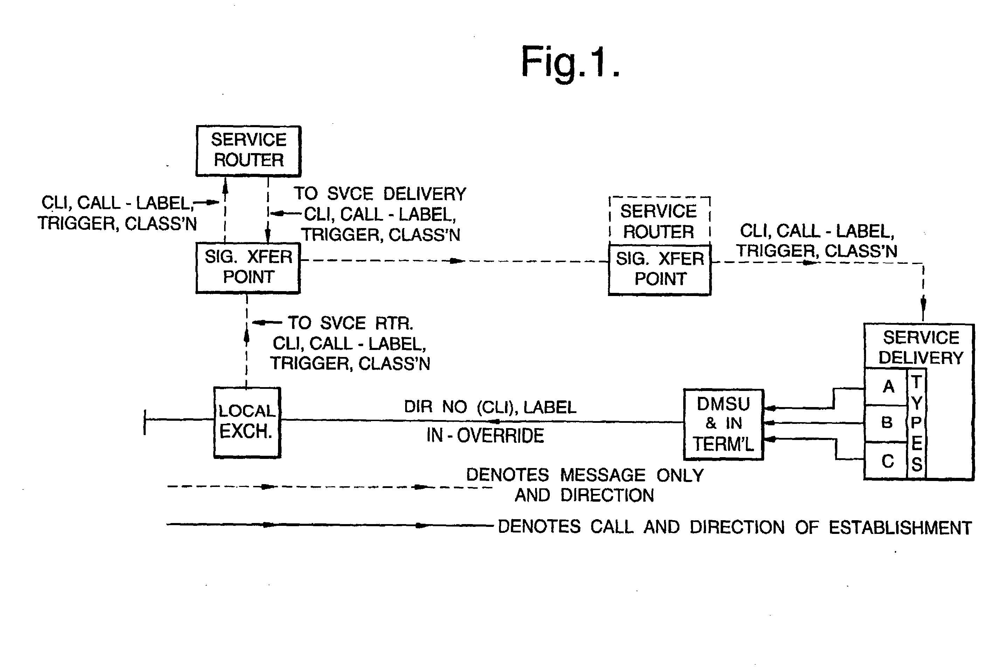

Referring now to Figure 1, each Local Exchange should have the ability to identify calls requiring Intelligent Network services and then to transmit a message via its IN message terminal addressed to the local IN Service Router. The message will contain the calling subscriber's directory number (Calling Line Identity - CLI), a call-label identifying the actual call incidence, and the relevant trigger information (dialled digits etc.). A classification field will be included (Coinbox, analogue exchange terminal etc.).

The Service Router simply re-addresses the message to the Service Delivery Point, or may re-address the message to another Service Router in the country or company providing the service which will in turn re-address the message to the Service Delivery Point.

Upon receiving the message, the Service Delivery Point will appoint a terminal to establish a call through the public network to pick-up the caller using the CLI, the call-label and the "IN override" facility. (IN override is a variant of the existing "operator-override" facility. It enables connection to a busy line but does not ring a free line.)

In the event that subsequent activity requires the call to be transferred to a different IN service, the current service delivery terminal will address a message containing the original CLI and call-label to the new service. The message may be addressed directly to the new service or may be addressed via a Service Router as before.

The new service will establish connection to the subscriber in the previously described IN override manner. The subscriber's local exchange will complete the new connection and terminate the previous connection.

For normal IN service traffic, no message will be returned to the local exchange via the message network other than when a call fails or is rejected. Messages may be returned however if the IN services are used to provide Advise Duration and Charge (AD&C) announcements etc..

Some IN services will provide single ended services such as booking reminder calls, reading mail-boxes or setting-up incoming call profiles. Other services will enable other parties to be brought into the connection such as Multi-party calls and Broker type services: such services will employ a multi-party bridge similar to operator services.

IN services with bridges may be daisy-chained using the technique employed to pick-up analogue exchange subscribers.

The local exchange will be required to identify IN service triggers as follows:

In the digits dialled by a calling subscriber. i.e. certain Subscriber Trunk Dialling (STD) codes. (Freephone etc..). certain Service Codes. (Codes of the form 1XX). certain supplementary service codes. (Codes of the form *nn#).

When the Local Exchange wishes to use IN services. e.g. Advise Duration and Charge (AD&C) announcement.

The local exchange may also be required to trigger when calls are made to certain numbers within the local numbering scheme. It may thus be necessary to enable incoming junctions to be picked-up by IN services when such numbers are dialled on incoming calls from other exchanges. This may be achieved using the same technique that enables IN services to pick-up junctions from analogue exchanges.
- NOTE.: Call charges for such services cannot be levied upon the caller due to the possibility of a non-digital interface preventing access to the caller's identity.
Interactive IN services cannot intercept incoming calls from other exchanges due to the existence of rotary dial telephones, incoming international calls and similar incompatibilities. Until the world is digital, it appears that only simple diversions are applicable to incoming calls, and such services are normally within the capability of the local exchange without IN assistance.

Local exchanges may be required to trigger in response to a "drop-back-and-consult-IN" message returned during a part-established call. This requirement however is improbable in that it cannot properly accommodate the situation where the drop-back message encounters a non-digital interface.

Supplementary service codes causing IN triggers may be received following a recall signal from a subscriber on an established outgoing or incoming call. (e.g. Hold for Enquiry to a Freephone number). The IN service request message will be passed to the IN Service Delivery Point via the Service Router as normal; the trigger information within the message indicating the type of access.

If the call connection is not admissible, the Service Delivery Point will return a call rejection message to the local exchange via the IN message network. Alternatively a Service Delivery terminal may pick-up the caller in the normal manner to provide an announcement - then release.

If the call connection is admissible, the delivery terminal will establish a connection to the caller using the "IN-intercept" facility. This facility is similar to the IN-override facility but requires that the existing call should be intercepted rather than be replaced as would arise when a call is transferred from one IN service to another.

The message from the Local Exchange to the IN Service Router should be as follows: The message must contain the directory number of the calling subscriber (CLI). The full STD (or International Subscriber Dialling-ISD?) number should be provided as the Service Delivery Point may be remote from the local area - or even overseas.

The message must contain a call label enabling the call to be positively identified in the local exchange when it has to be picked-up by a delivery terminal. The call label also enables the local exchange to identify an individual line when the directory number indicates a PBX or Centrex line.

The message must contain the digits dialled by the subscriber. This will comprise the trigger condition and in some cases will include a complete STD number or even an international number.

The message will include a field indicating the classification of the caller for use when the call may require special treatment. e.g. when variations of call charges must be returned to the caller as the call progresses. (coinbox, Subscribers Private Meter-SPM, Metering-over-Junction-M0J).

Services like AD&C announcements which are triggered by the local exchange rather than by subscriber actions, will need additional data (e.g. the number of charge units).

AD&C announcements and similar services requested by the local exchange may initially be acknowledged by the Service Delivery terminal. After provision of the service, a new message exchange will be initiated by the delivery terminal to the local exchange indicating success or otherwise. Such messages are not detailed in this description.

### IN Override facility - call pick-up.

The establishment of a connection between a caller and a service delivery terminal will be initiated by the delivery terminal. An incoming call to the caller's directory number will be received at the local exchange. The call set-up information will indicate the IN-override requirement and enable access to the call-label.

The call-label will identify a particular line when the directory number indicates a PBX, and will enable the local exchange to identify that the caller has not cleared and reseized since the IN application was made.

The caller is expected to be busy and a connection between the caller and the incoming junction (delivery terminal) should be completed in a similar manner to that in which the call would normally have been connected to an outgoing junction. CONNECTION COMPLETE and ANSWER messages should be returned to the delivery terminal as appropriate. No connection should be made if the subscriber has cleared, but a call failure message should be returned to the delivery terminal via the public network (incoming junction) indicating the reason.

The call record should be amended accordingly and should ensure that if a RECALL signal is subsequently received from the caller, it will result in a message being passed to the incoming junction (delivery terminal). The recall will not be handled by the local exchange. Otherwise, the call will be treated as an ordinary answered incoming call; call control will be with the IN terminal which can hold or release the connection as it pleases.
- NOTE.: The need to return a "recall" message to incoming junctions as specified above is a new signalling requirement; its handling will be similar to the "called subscriber clears" message.

The original call-label number must continue to be valid and may be received from another service delivery terminal if the call is subsequently to be transferred from one delivery terminal to another.

### IN-override facility - call replacement.

The local exchange call-control mechanism must allow that a subscriber on an established incoming call can be picked-up in the manner described, in which case the previously established connection will undergo the normal release sequence. This action will apply when a call has to be transferred from one IN service to another, and may also apply to an ordinary incoming call that originated from an IN type terminal. (e.g. when IN type terminals are used to provide mobile services).

### IN-override facility - call interception.

The call control mechanism should also allow IN terminals to intercept an established call as a third party. (e.g. Hold-for - Enquiry to a Freephone number). In such cases the call set-up information from the delivery terminal will indicate that the existing call should be intercepted rather than replaced.

All ports of IN service delivery terminals are outgoing-only and appear as incoming junctions on a digital exchange.

For accounting purposes, the administration will probably require that calls originated by the terminals are recorded in a manner similar to lines from other network operators.

Many of the calls originated by the delivery terminals will be ordinary outgoing calls, but the majority will require the called party to be picked-up using the IN override facility. These calls and their handling is similar to the existing "operator-override" facility and would appear to require no additional facility in the intermediate exchanges.

The only new requirement for tandem exchanges, or exchanges with delivery terminals, is to receive a RECALL messsage from the outgoing junction (local exchange) and pass it back to the incoming junction (delivery terminal). The handling of the message will be very similar to the handling of the existing "called party clears" message.

Access to IN services from analogue local exchanges will require that calls requiring such services must be routed to a digital exchange over a junction enabling the transmission of meter signals (M0J).

When an IN service is dialled on a junction from the analogue exchange, the digital exchange will forward a message to the IN Service Router as normal but the CLI of the caller will contain a spare directory number belonging to the digital exchange and reserved for this purpose.

The call will be picked-up by the delivery terminal making a call to the reserved number. The call-control mechanism will identify the reserved number as indicating the requirement to pick-up an incoming junction instead of a subscriber and will use the call-label to identify the junction.

This method can be used to pick-up any incoming junction requiring IN services and can be used to daisy-chain IN services when the intermediate service enables a through connection.

The charge record for IN calls will be produced by the IN service delivery terminal and enables call charges to vary according to which aspect of the service is chosen by the caller, and to vary as the call progresses.

In order that services with variable charges can be available to coinboxes, lines with meter recorders (SPM) and subscribers on analogue exchanges, it will be necessary to enable charge control messages to be returned to the originating digital exchange from the service delivery terminal.

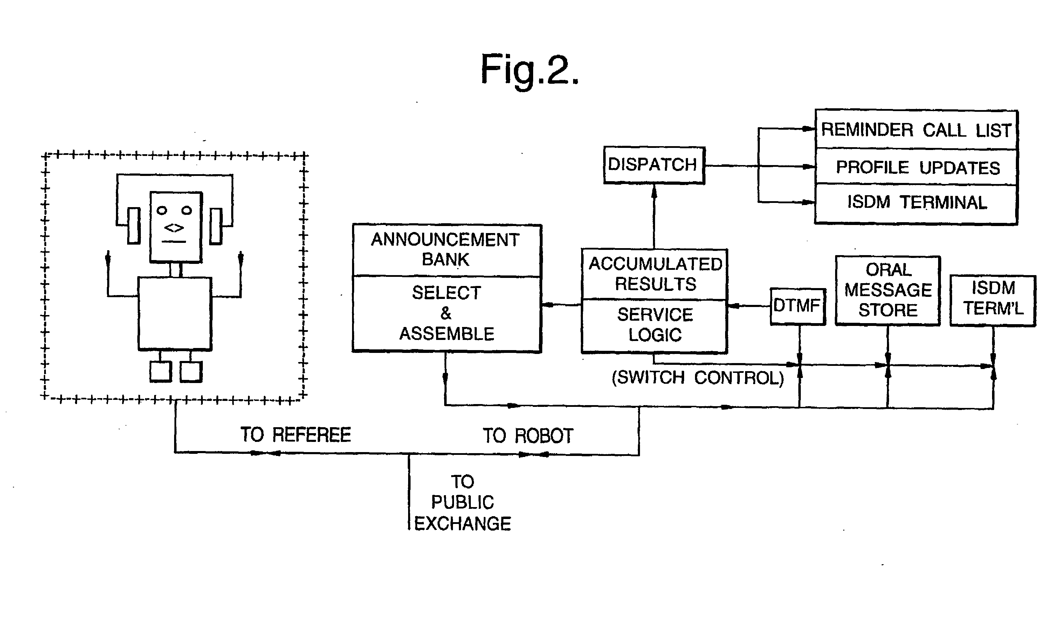

Figure 2 illustrates a typical IN service delivery terminal in which a robot voice is used to interrogate the caller and gather the responses.

Having established connection to the subscriber through the public network the delivery terminal service logic selects a first announcement to guide the subscriber through the relevant procedure.

The subscriber's keyed response is detected in the DTMF receiver and passed to the service logic where it is recorded in the accumulated response and used to identify the next guidance announcement.

When setting-up a call diversion for his incoming calls, a subscriber may wish to record a message advising callers that their call is being transferred and indicating how to proceed, e.g. "Your call will be forwarded to Evans coal-yard. Mr. Jones is visiting Mr. Rees in the Accounts Department". (Without such a message the caller would probably clear when his call to "Jones the Accountant" was answered by "Evans the Coal"; or would be unable to find Mr. Jones among the coals).

To this end the service logic is able to replace or supplement the Dual Tone Multi-Frequency (DTMF) receiver with a voice box.

At the completion of the call the service logic dispatches the results to the appropriate destination. (Reminder call list, Personal Number profiles etc..).

Inevitably inexperienced callers, impatience or illogical requirements will result in conflict between the robot voice and the caller. Therefore the delivery terminal is able to call in the services of a human referee to restore customer satisfaction and peace. The caller also may call in the referee.

The figure also shows that the service logic is able to participate in Integrated Services Digital Network (ISDN) activity. There may be no identified need for such provision at the moment, but whatever the Service Provider chooses to connect is immediately available to the caller with no alteration to the public network. The fact that all call connections are initiated by the delivery terminal enables appropriate control of route selection.

## Claims

1. A telecommunications system comprising a plurality of subscriber and/or junction terminals connected to a local exchange, the local exchange having an Intelligent Network message terminal, a Signal Transfer Point and having means for identifying an Intelligent Network Service Request, **characterized in that** the Intelligent Network Service Request includes the directory number of an originating one of the plurality of subscriber and/or junction terminals, a call identifier and an Intelligent Network Service Identifier from an originating one of the plurality of subscriber and/or junction terminals, the local exchange further having a Service Router addressable from the local exchange via the message terminal and means for addressing a message via the message terminal to the Service Router, the Service Router being arranged to readdress the message to an appropriate Intelligent Network Service Delivery Point, the Service Delivery Point upon receipt of the message being adapted to establish a connection between the Service Delivery Point and the originating one of the plurality of subscriber and/or junction terminals.

## Patentansprüche

1. Telekommunikationssystem mit mehreren Teilnehmerund/oder Verbindungsanschlüssen, die mit einer lokalen Vermittlungsstelle verbunden sind, wobei die lokale Vermittlungsstelle einen Nachrichtenanschluß für Intelligente Netze, eine Signalübermittlungsstelle und eine Einrichtung zur Identifikation einer Dienstanforderung für Intelligente Netze aufweist,
**dadurch gekennzeichnet,**
**daß** die Dienstanforderung für Intelligente Netze die Teilnehmerrufnummer eines Ursprungs unter mehreren Teilnehmerund/oder Verbindungsanschlüssen, eine Rufkennung und eine Dienstkennung für Intelligente Netze von einem Ursprung unter mehreren Teilnehmer- und/oder Verbindungsanschlüssen umfaßt, wobei die lokale Vermittlungsstelle einen Dienstrouter, der von der lokalen Vermittlungsstelle aus über den Nachrichtenanschluß adressierbar ist, und eine Einrichtung aufweist, um eine Nachricht über den Nachrichtenanschluß zu dem Dienstrouter zu adressieren, wobei der Dienstrouter eingerichtet ist, um die Nachricht zu einer geeigneten Dienstübergabestelle für Intelligente Netze neuzuadressieren, wobei die Dienstübergabestelle eingestellt ist, auf den Empfang der Nachricht hin eine Verbindung zwischen der Dienstübergabestelle und dem Ursprung unter mehreren Teilnehmer- und/oder Verbindungsanschlüssen herzustellen.

## Revendications

1. Système de télécommunication comprenant une multiplicité de terminaux d'abonnés et/ou de jonction connectés à un autocommutateur local, l'autocommutateur local disposant d'un terminal de messagerie de Réseau Intelligent et d'un point de transfert de signal et comprenant des moyens d'identification d'une requête de service de Réseau Intelligent, **caractérisé en ce que** la requête de service de Réseau Intelligent comprend le numéro d'appel de l'abonné et/ou du terminal de jonction de départ parmi la multiplicité d'abonnés et/ou de terminaux de jonction, un identificateur d'appel et un identificateur de service de Réseau Intelligent à partir de l'abonné et/ou du terminal de jonction de départ parmi la multiplicité d'abonnés et/ou de terminaux de jonction, l'autocommutateur local comprenant en outre un routeur de service adressable depuis l'autocommutateur local par l'intermédiaire du terminal de messagerie et des moyens pour adresser un message par l'intermédiaire du terminal de messagerie vers le routeur de service, le routeur de service étant conçu pour adresser à nouveau le message vers un point de livraison de service de Réseau Intelligent approprié, le point de livraison de service, à réception du message, étant conçu pour établir une connexion entre le point de livraison de service et l'abonné et/ou le terminal de jonction de départ parmi la multiplicité d'abonnés et/ou de terminaux de jonction.
